# EUROPÄISCHE PATENTSCHRIFT

(11) **EP 4 086 056 B1**
(45) Veröffentlichungstag und Bekanntmachung des Hinweises auf die Patenterteilung: **27.03.2024**
(21) Anmeldenummer: 22174627.4
(22) Anmeldetag: 09.08.2018
(51) Int. Cl.: B28C 7/04, B28B 1/00, B28C 5/08, B33Y 30/00, B29C 64/00, B01F 27/072, B01F 27/1121, B01F 27/2123, B01F 27/213, B01F 35/00, B33Y 10/00

(54) **VERFAHREN ZUM HERSTELLEN EINER STRUKTUR AUS EINEM BAUSTOFF**
METHOD OF MANUFACTURING A STRUCTURE FROM A BUILDING MATERIAL
PROCÉDÉ DE FABRICATION D'UNE STRUCTURE À PARTIR D'UN MATÉRIAU DE CONSTRUCTION

(30) Priorität: 09.08.2017 EP 17185653
(43) Veröffentlichungstag der Anmeldung: 09.11.2022
(62) Teilanmeldung aus: 18749395.2
(73) Patentinhaber: Sika Technology AG, 6340 Baar (CH)
(72) Erfinder: KUHN, Patrik, 8046 Zürich (CH); BOURQUIN, Raphael, 8617 Mönchaltorf (CH); BRÜHWILER, Armin, 9606 Bütschwil (CH); LOOTENS, Didier, 8700 Küsnacht (CH)
(74) Vertreter: Sika Patent Attorneys

(56) Entgegenhaltungen:
- EP-A2- 1 529 617
- CN-U- 204 354 263
- KR-A- 20150 138 608
- KR-A- 20160 068 564
- US-A1- 2016 107 396

## Beschreibung

Die vorliegende Erfindung betrifft ein Verfahren zum Herstellen einer Struktur aus Baustoff.

Zum automatisierten Applizieren von Baustoffen wurden bereits verschiedenartige Systeme vorgeschlagen. So offenbart beispielsweise die WO 2013/064826 A1 ein Verfahren sowie eine Vorrichtung zum Applizieren von zementösen Materialien. Dabei wird flüssiges zementöses Material über einen beweglichen Roboterarm an einem Bestimmungsort appliziert. Nachteilig an solchen Systemen ist es, dass der Baustoff dabei oftmals nicht genügend konstant ist bezüglich verschiedener Eigenschaften, insbesondere bezüglich einer Durchmischung von Komponenten. Dadurch kann es an einer mit dem Baustoff hergestellten Struktur zu Unregelmässigkeiten kommen.

Die Druckschrift US 2016/107 396 A1 offenbart ein Verfahren zum Herstellen einer Struktur aus einem Baustoff, laut dem Oberbegriff des Anspruchs 1.

Eine Aufgabe der vorliegenden Erfindung besteht somit darin, ein Verfahren zur Herstellung einer Struktur aus einem Baustoff zur Verfügung zu stellen, wobei der Baustoff möglichst konstant hinsichtlich seinen Eigenschaften in Bezug auf die Anwendung ist. Insbesondere soll dadurch mit dem Baustoff reproduzierbar und kontinuierlich eine Struktur in hoher Qualität aufgebaut werden können.

Ein nicht erfindungsgemäßes System umfasst: eine erste Komponente des Baustoffes, die erste Komponente umfassend einen ersten Bestandteil und einen zweiten Bestandteil; eine zweite Komponente des Baustoffes; einen ersten Mischer zur Vermischung des ersten Bestandteils und des zweiten Bestandteils der ersten Komponente; eine Zuführvorrichtung zum Zuführen des ersten Bestandteils der ersten Komponente zum ersten Mischer; eine Bewegungsvorrichtung zur Veränderung eines Applikationsortes in einem Raum; und einen zweiten Mischer zur Vermischung der ersten Komponente und der zweiten Komponente.

Die hier vorgeschlagene Lösung hat zunächst den Vorteil, dass durch den Einsatz von einem ersten Mischer und einem zweiten Mischer eine konstantere Eigenschaft des Baustoffes bei dessen Austritt aus dem System erreichbar ist. Das hier vorgeschlagene System sieht insbesondere vor, dass Bestandteile der ersten Komponente mit dem ersten Mischer gemischt werden, bevor die erste Komponente mit einem zweiten Mischer mit der zweiten Komponente vermischt wird. Ein solch zweistufiger Mischprozess erlaubt eine insgesamt bessere Durchmischung aller Bestandteile und Komponenten des Baustoffes.

Das hier vorgeschlagene System bietet weiterhin den Vorteil, dass durch das Vorsehen von zwei Mischern ein Applikationsvorgang des Baustoffes besser automatisiert werden kann. Im Unterschied zu Systemen mit nur einem Mischer können dem hier vorgeschlagenen System einzelne Bestandteile und Komponenten zugeführt werden, welche jeweils für sich lagerstabil sind und daher auf einfache Art und Weise automatisiert dem System zugeführt werden können.

Ein weiterer Vorteil des hier vorgeschlagenen Systems besteht darin, dass durch das Vorsehen von zwei Mischern mehr Energie in dem Baustoff eingetragen werden kann. Dies führt einerseits zu einer besseren Durchmischung, zu weniger Lufteinschlüssen im Baustoff und weiterhin kann dadurch ein Wasserverbrauch für den Baustoff reduziert werden. Zudem können durch den erhöhten Energieeintrag weniger Additive verwendet werden, was zu einer preisgünstigeren Lösung führt.

Insgesamt tragen alle diese Eigenschaften des hier vorgeschlagenen Systems zu besseren Eigenschaften des Baustoffes für das automatisierte Applizieren des Baustoffes bei, beispielsweise um Strukturen aus Baustoff herzustellen.

In einer beispielhaften Ausführungsform umfasst der Baustoff Beton oder Mörtel. Dabei umfasst der erste Bestandteil der ersten Komponente des Baustoffes Zement und eine Gesteinskörnung, und der zweite Bestandteil der ersten Komponente des Baustoffes umfasst Wasser.

Dies hat den Vorteil, dass mit dem ersten Mischer ein homogener pumpbarer Beton oder Mörtel hergestellt werden kann, indem der Zement und die Gesteinskörnung mit Wasser vermischt werden.

Insbesondere ist dadurch ein pumpbarer Beton oder Mörtel als erste Komponente des Baustoffes herstellbar, welcher vergleichsweise wenig Wasser und wenige Lufteinschlüsse aufweist und so dem zweiten Mischer zuführbar ist.

In einer beispielhaften Weiterbildung ist der erste Bestandteil der ersten Komponente des Baustoffes eine trockene Mischung, insbesondere eine Mischung umfassend Zement und eine Gesteinskörnung.

In einer beispielhaften Weiterbildung umfasst der zweite Bestandteil der ersten Komponente des Baustoffes Additive, welche dem Wasser beigefügt sind.

Als Additive können beispielsweise ein Betonzusatzmittel und/oder ein Mörtelzusatzmittel und/oder Prozesschemikalien verwendet werden.

Das wenigstens eine Additiv umfasst insbesondere einen Entschäumer, ein Netzmittel, einen Farbstoff, ein Konservierungsmittel, ein Fliessmittel, einen Verzögerer, weitere Beschleuniger, ein Polymer, einen Luftporenbildner, ein Rheologiehilfsmittel, einen Viskositätsmodifizierer, ein Pumphilfsmittel, einen Schwindreduzierer oder einen Korrosionsinhibitor oder Kombinationen davon.

In einer beispielhaften Ausführungsform umfasst die zweite Komponente des Baustoffes einen Erstarrungsbeschleuniger.

Dies bietet den Vorteil, dass dadurch der Erstarrungsbeschleuniger im zweiten Mischer mit der bereits vermischten ersten Komponente vermischt werden kann. Durch das Mischen des Erstarrungsbeschleunigers mit einer bereits gut durchmischten ersten Komponente können bessere Eigenschaften des Baustoffes bei dessen Verlassen des Systems erzielt werden. Da die erste Komponente des Baustoffes durch den ersten Mischer bereits aufgeschlossen ist, kann der im zweiten Mischer hinzugefügte Erstarrungsbeschleuniger besser auf die erste Komponente des Baustoffes einwirken. Dadurch kann weniger Erstarrungsbeschleuniger eingesetzt werden, was zu einer Kostenreduktion führt, und was zudem zu einem verringerten Wassereintrag durch den Erstarrungsbeschleuniger führt, sodass eine Erstarrung wiederum schneller erfolgt.

In einer alternativen Ausführungsform handelt es sich beim Baustoff um eine mehrkomponentige Zusammensetzung auf Kunststoffbasis. Dabei umfasst die erste Komponente typischerweise ein reaktives Polymer oder Monomer und die zweite Komponente einen Härter oder Beschleuniger für die Vernetzung oder Aushärtung dieses Polymers oder Monomers. Beispielsweise handelt es dich bei derartigen Zusammensetzungen um Epoxidharze, Polyurethane, silanfunktionelle Polymere, Silicone, Acrylate und dergleichen.

In einer beispielhaften Ausführungsform ist der erste Mischer und/oder der zweite Mischer modular aufgebaut, wobei der Mischer dabei ein Antriebsmodul mit einem ersten Kupplungselement und ein Mischkammermodul mit einem zweiten Kupplungselement umfasst, wobei die Module über die Kupplungselemente in einem Verwendungszustand wirkverbunden sind.

Das Vorsehen eines modular aufgebauten Mischers bietet den Vorteil, dass lediglich diejenigen Bestandteile des Mischers ausgetauscht und/oder unterhalten und/oder gereinigt werden können, welche mit dem Baustoff in Berührung kommen. Somit müssen lediglich leichtere Bestandteile des Mischers entfernt werden, um Unterhaltsarbeiten am System auszuführen. Zudem kann beispielsweise das Mischkammermodul als Ganzes ausgetauscht werden, insbesondere für eine Anwendung mit einem anderen Baustoff.

In einer beispielhaften Weiterbildung umfassen das erste Kupplungselement und das zweite Kupplungselement jeweils eine Zahnung, so dass in einem Verwendungszustand das Antriebsmodul und das Mischkammermodul miteinander mechanisch wirkverbunden sind.

In einer beispielhaften Ausführungsform ist der erste Mischer stationär angeordnet.

Das Vorsehen eines stationären ersten Mischers bietet den Vorteil, dass dadurch die erste Komponente im ersten Mischer kosteneffizient automatisiert hergestellt werden kann, beispielsweise durch entsprechende Einrichtungen für die Zuführung der Bestandteile der ersten Komponente.

In einer beispielhaften Ausführungsform ist der zweite Mischer an der Bewegungsvorrichtung angeordnet, wobei der zweite Mischer durch die Bewegungsvorrichtung bewegbar ist.

Das Vorsehen eines bewegbar an der Bewegungsvorrichtung angeordneten zweiten Mischers hat den Vorteil, dass dadurch der zweite Mischer in einem Bereich des Applikationsortes angeordnet werden kann, wodurch die erste Komponente und die zweite Komponente kurz vor Verlassen des Baustoffes des Systems gemischt werden können. Dadurch kann beispielsweise Erstarrungsbeschleuniger mit pumpbaren Beton oder Mörtel im zweiten Mischer vermischt werden, und die Gefahr einer Blockierung des Systems durch einen erstarrten Beton oder Mörtel im System drin ist durch eine hier vorgeschlagene Anordnung des zweiten Mischers reduziert.

In einer beispielhaften Ausführungsform umfassen der erste Mischer und/oder der zweite Mischer eine Rührwelle, welche auf einem ersten Abschnitt mit Rührelementen bestückt ist und an welcher auf einem zweiten Abschnitt ein Förderelement angeordnet ist.

Es hat sich gezeigt, dass einerseits die erste Komponente des Baustoffes auf diese Art und Weise aus dem ersten Mischer gefördert werden kann, und dass insbesondere der Baustoff mit einer solchen Anordnung im zweiten Mischer auf vorteilhafte Art und Weise gemischt und gefördert werden kann.

In einer vorteilhaften Weiterbildung sind die Rührelemente als Stifte ausgebildet.

In einer weiteren vorteilhaften Ausbildung haben die Rührelemente ein Aussengewinde, so dass die Rührelemente in Vertiefungen mit Innengewinden auf der Rührwelle eingedreht werden können.

In einer beispielhaften Weiterbildung ist das Förderelement als Förderschnecke ausgebildet.

In einer beispielhaften Weiterbildung ist der erste Abschnitt der Rührwelle in einem ersten Bereich einer Trommel des Mischers angeordnet, in welchem die Trommel zumindest einen Einlass hat. Zudem ist der zweite Abschnitt der Rührwelle in einem zweiten Bereich der Trommel angeordnet, in welchem die Trommel einen Auslass hat.

In einer beispielhaften Weiterbildung ist das Förderelement von der Rührwelle in Richtung einer Achse der Rührwelle abziehbar.

In einer beispielhaften Weiterbildung umfasst das Förderelement ein Befestigungselement zur Verriegelung des Förderelementes auf der Rührwelle.

In einer beispielhaften Weiterbildung ist eine Trommel des Mischers einstückig und/oder röhrenförmig ausgebildet.

In einer beispielhaften Ausführungsform umfasst die Zuführvorrichtung eine Lagervorrichtung und eine Dosiervorrichtung.

Das Vorsehen einer separaten Lagervorrichtung und Dosiervorrichtung hat den Vorteil, dass dadurch eine Applikation des Baustoffes mit dem System kontinuierlich ausgestaltet werden kann.

In einer beispielhaften Weiterbildung ist die Dosiervorrichtung als gravimetrische Dosiervorrichtung ausgebildet.

Das Vorsehen einer gravimetrischen Dosiervorrichtung bietet den Vorteil, dass der erste Bestandteil der ersten Komponente, insbesondere ein trockenes Gemisch aus Zement und Gesteinskörnung, in genauen Mengen dem System zugeführt werden kann. Dadurch kann eine Qualität des Baustoffes konstant gehalten werden.

In einer beispielhaften Weiterbildung umfasst die Lagervorrichtung einen Trichter und eine Fördereinrichtung. Die Fördereinrichtung kann insbesondere als Förderschnecke oder Förderband ausgebildet sein.

Das Vorsehen eines Trichters und einer Fördereinrichtung hat den Vorteil, dass dadurch grosse Einheiten des ersten Bestandteils der ersten Komponente des Baustoffes, wie beispielsweise grosse Gebinde oder Säcke (in der Fachsprache "Big Bag" genannt), in der Lagervorrichtung verwendet werden. Beispielsweise können solche grossen Einheiten des ersten Bestandteils der ersten Komponente in der Lagervorrichtung aufgehängt werden und über einen Trichter einer Fördereinrichtung zugeführt werden. Der Trichter hat dabei den Vorteil, dass er als Speicher benutzt werden kann, und so einen Zeitabschnitt bei einem Austausch der Gebinde des ersten Bestandteils der ersten Komponente des Baustoffes überbrücken kann. Durch die Fördereinrichtung kann beispielsweise die erste Komponente der Dosiervorrichtung zugeführt werden.

In einer beispielhaften Ausführungsform umfasst das System eine erste Pumpe und/oder eine zweite Pumpe, wobei durch die erste Pumpe die erste Komponente vom ersten Mischer zum zweiten Mischer pumpbar ist und wobei durch die zweite Pumpe die zweite Komponente zum zweiten Mischer pumpbar ist.

Das Vorsehen von einer solchen ersten Pumpe und/oder zweiten Pumpe für die Zuführung der ersten Komponente und/oder der zweiten Komponente zum zweiten Mischer bietet den Vorteil, dass dadurch die erste Komponente und die zweite Komponente dem zweiten Mischer kontinuierlich und mit konstantem Fluss zugeführt werden können.

In einer beispielhaften Ausführungsform hat die Bewegungsvorrichtung einen bewegbaren Kopf, wobei der zweite Mischer am bewegbaren Kopf angeordnet ist, so dass der zweite Mischer in einem Bereich des Applikationsortes ist.

Das Anordnen des zweiten Mischers an einem Kopf der Bewegungsvorrichtung hat den Vorteil, dass dadurch die erste und die zweite Komponente unmittelbar vor dem Austritt des Baustoffes aus dem System miteinander vermischt werden. Dadurch kann der pumpbare Beton oder Mörtel mit dem Erstarrungsbeschleuniger derart vermischt werden, dass der Baustoff kurz nach dessen Austritt aus dem System erstarrt, wodurch effizient Strukturen aus dem Baustoff hergestellt werden können. Insbesondere können dadurch Strukturen mit dem Baustoff in der Art eines 3D-Druckers hergestellt werden.

In einer beispielhaften Ausführungsform ist die Bewegungsvorrichtung kranartig ausgebildet. In einer beispielhaften Weiterbildung hat die Bewegungsvorrichtung einen beweglichen Arm.

In einer alternativen Weiterbildung umfasst die Bewegungsvorrichtung mehrere Baugruppen, welche auf Schienen verschiebbar angeordnet sind.

Die eingangs gestellte Aufgabe wird gelöst durch ein Verfahren zum Herstellen einer Struktur aus einem Baustoff, wobei das Verfahren umfasst: Bereitstellen eines ersten Bestandteils einer ersten Komponente des Baustoffes; Bereitstellen eines zweiten Bestandteils der ersten Komponente des Baustoffes; Mischen des ersten Bestandteils und des zweiten Bestandteils der ersten Komponente in einem ersten Mischer; Bereitstellen einer zweiten Komponente des Baustoffes; Mischen der ersten Komponente und der zweiten Komponente in einem zweiten Mischer; Bewegen einer Bewegungsvorrichtung zur Veränderung eines Applikationsortes in einem Raum; und Applizieren des Baustoffes, wobei der zweite Mischer mit einer Drehzahl von mehr als 500 Umdrehungen pro Minute betrieben wird.

In einer beispielhaften Ausführungsform wird der erste Mischer mit einer Drehzahl von mehr als 500 Umdrehungen pro Minute betrieben, wird der erste Mischer und/oder der zweite Mischer bevorzugt mit einer Drehzahl von mehr als 650 Umdrehungen pro Minute betrieben, besonders bevorzugt mit einer Drehzahl von mehr als 800 Umdrehungen pro Minute, besonders bevorzugt mit einer Drehzahl von mehr als 1000 Umdrehungen pro Minute.

Das Betreiben des zweiten Mischers oder des ersten und des zweiten Mischers mit hohen Drehzahlen bietet den Vorteil, dass dadurch Mischgüter mit hoher oder schnell ansteigender Viskosität (wie beispielsweise pumpbarer Beton oder Mörtel oder Beton oder Mörtel mit Erstarrungsbeschleuniger) möglichst effizient und rasch durchmischt werden können, und anschliessend aus dem Mischer gefördert werden können, ohne dass dabei der Mischer blockiert und in seiner Funktion versagt.

In Versuchen hat sich gezeigt, dass durch höhere Drehzahlen folgende Effekte auftreten: Erstens werden der Beton oder Mörtel und der Erstarrungsbeschleuniger besser durchmischt, was ein kontrollierbareres Erstarrungsverhalten zur Folge hat. Zweitens wird der Beton oder Mörtel stärker aufgebrochen, so dass der Erstarrungsbeschleuniger auf einer grösseren Oberfläche des Betons oder Mörtels einwirken kann, was eine schnellere und besser kontrollierbare Reaktion zwischen Beton oder Mörtel und Beschleuniger zur Folge hat. Drittens wird mehr Energie in das Gemisch eingetragen, was eine stärkere Erwärmung von Beton oder Mörtel und Beschleuniger zur Folge hat, was wiederum den Erstarrungsprozess beschleunigt.

Die oben beschriebenen Effekte wurden in steigendem Masse bis zu einer Drehzahl von 2000 Umdrehungen pro Minute beobachtet.

In einer beispielhaften Ausführungsform beträgt beim Mischen im ersten Mischer eine mittlere Verweildauer der Bestandteile bzw. Komponenten des Baustoffes im Mischer weniger als 40 s, besonders bevorzugt weniger als 30 s, besonders bevorzugt weniger als 20 s.

In einer beispielhaften Ausführungsform beträgt beim Mischen im zweiten Mischer eine mittlere Verweildauer der Bestandteile bzw. Komponenten des Baustoffes im Mischer weniger als 20 s, besonders bevorzugt weniger als 15 s, besonders bevorzugt weniger als 10 s.

Die mittlere Verweildauer des Gemisches in der Trommel ist dabei die Zeitdauer, welche ein Partikel in der Trommel (vom Einlass der Trommel bis zum Auslass der Trommel) durchschnittlich verweilt.

Eine oben genannte vorteilhafte mittlere Verweildauer von höchstens einigen wenigen Sekunden hat den Vorteil, dass dadurch ein Mischgut von hoher oder stark ansteigender Viskosität förderbar ist, wie dies beispielsweise pumpbarer Beton oder Mörtel oder Beton oder Mörtel mit zugesetztem Erstarrungsbeschleuniger ist.

In einer beispielhaften Ausführungsform wird beim Bereitstellen des ersten Bestandteils der ersten Komponente des Baustoffes der erste Bestandteil gravimetrisch dosiert.

Das gravimetrische Dosieren des ersten Bestandteils der ersten Komponente des Baustoffes, insbesondere einer trockenen Mischung aus Zement und Gesteinskörnung, hat den Vorteil, dass dadurch ein Baustoff erzielbar ist, welcher konstante Eigenschaften aufweist.

In einer beispielhaften Ausführungsform wird beim Bereitstellen des zweiten Bestandteils der ersten Komponente des Baustoffes der zweite Bestandteil volumetrisch dosiert.

Das volumetrische Dosieren des zweiten Bestandteils, insbesondere von Wasser mit oder ohne Additiven, hat den Vorteil, dass dadurch ein kostengünstiges System zum Zuführen des zweiten Bestandteils der ersten Komponente zur Verfügung gestellt werden kann.

Im Unterschied zum trockenen Gemisch des ersten Bestandteils kann der flüssige zweite Bestandteil mit einer volumetrischen Dosierung genügend genau dosiert zugeführt werden.

In einer beispielhaften Ausführungsform wird der Baustoff in zumindest teilweise sich überlagernden Lagen appliziert, so dass die Struktur in einer Art eines 3D-Druckers aufgebaut wird.

Der Vorteil von in Lagen appliziertem Baustoff liegt darin, dass dadurch automatisiert und effizient ganze Strukturen aus Baustoff aufgebaut werden können.

In einer beispielhaften Weiterbildung wird beim Applizieren eine bestehende Lage erst dann mit einer neuen Lage des Baustoffes überlagert, wenn die bestehende Lage eine genügend hohe Festigkeit aufweist, um eine ursprüngliche Form unter einem Gewicht der neuen Lage beizubehalten.

Durch das Applizieren des Baumaterials in der Art eines 3D-Druckers sind insbesondere keine Schalungen für den Baustoff mehr notwendig. Zudem kann eine Formgebung der zu erstellenden Struktur aus Baustoff wesentlich freier gewählt werden.

Einzelheiten und Vorteile der Erfindung werden im Folgenden anhand von Ausführungsbeispielen und mit Bezug auf schematische Zeichnungen beschrieben. Es zeigen:
- Fig. 1: eine schematische Darstellung eines beispielhaften Systems zum Applizieren eines Baustoffes;
- Fig. 2: schematische Darstellung eines beispielhaften Mischers;
- Fig. 3: schematische Darstellung eines beispielhaften Antriebsmoduls und Mischkammermoduls eines Mischers;
- Fig. 4: eine schematische Darstellung eines beispielhaften Wellenmoduls und Trommelmoduls eines Mischkammermoduls; und
- Fig. 5: schematische Darstellung eines beispielhaften Verfahrens zum Herstellen einer Struktur aus einem Baustoff.

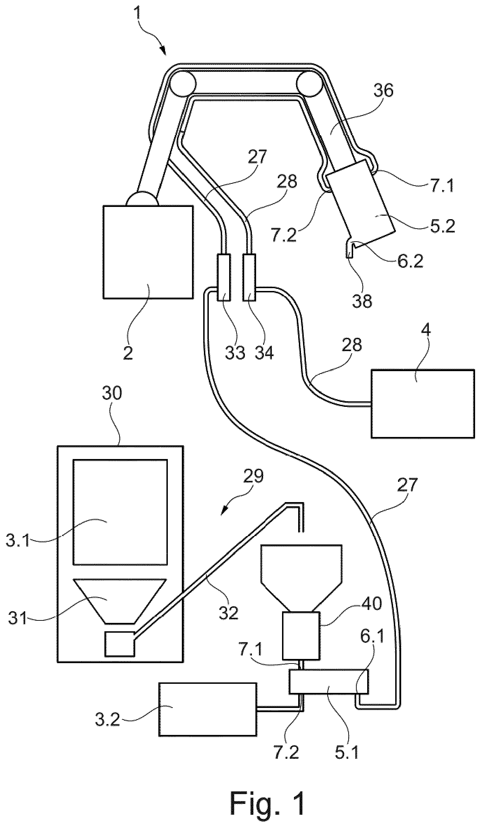

In Fig. 1 ist schematisch ein beispielhaftes System 1 zum Applizieren eines Baustoffes dargestellt. Das System 1 umfasst dabei eine Bewegungsvorrichtung 2 zur Veränderung eines Applikationsortes in einem Raum. In diesem Ausführungsbeispiel ist die Bewegungsvorrichtung 2 als kranartige Vorrichtung mit einem beweglichen Arm ausgebildet. Der Arm hat dabei an einem distalen Ende einen Kopf 36.

In einer Lagervorrichtung 30 wird ein erster Bestandteil 3.1 einer ersten Komponente 3 des Baustoffes über einen Trichter 31 und über eine Fördereinrichtung 32 einer Dosiervorrichtung 40 zugeführt. Dabei bilden die Dosiervorrichtung 40 und die Lagervorrichtung 30 zusammen eine Zuführvorrichtung 29, welche den ersten Bestandteil 3.1 der ersten Komponente 3 einem ersten Mischer 5.1 zuführen kann. Dabei wird der erste Bestandteil 3.1 über einen ersten Einlass 7.1 des ersten Mischers 5.1 zugeführt.

Ein zweiter Bestandteil 3.2 der ersten Komponente 3 wird dem ersten Mischer 5.1 über einen zweiten Einlass 7.2 des ersten Mischers 5.1 zugeführt.

Im ersten Mischer 5.1 werden der erste Bestandteil 3.1 und der zweite Bestandteil 3.2 zur Bildung der ersten Komponente 3 des Baustoffes gemischt. Über einen Auslass 6.1 des ersten Mischers 5.1 wird die erste Komponente 3 über ein erstes Schlauchsystem 27 dem zweiten Mischer 5.2 zugeführt. Dabei kann eine erste Pumpe 33 die erste Komponente 3 durch das erste Schlauchsystem 27 fördern.

Weiterhin umfasst das System 1 eine zweite Komponente 4, welche dem zweiten Mischer 5.2 über ein zweites Schlauchsystem 28 zuführbar ist. Dabei kann auch hier eine zweite Pumpe 34 vorgesehen sein, um die zweite Komponente 4 durch das zweite Schlauchsystem 28 zu fördern.

Im zweiten Mischer 5.2 werden die erste Komponente 3 und die zweite Komponente 4 miteinander vermischt. Dabei wird die erste Komponente 3 über einen ersten Einlass 7.1 dem zweiten Mischer 5.2 zugeführt, und die zweite Komponente 4 wird über einen zweiten Einlass 7.2 dem zweiten Mischer 5.2 zugeführt. Der im zweiten Mischer 5.2 hergestellte Baustoff verlässt den zweiten Mischer 5.2 über einen Auslass 6.2 des zweiten Mischers 5.2, und wird sodann über eine Austrittsöffnung 38 appliziert.

In diesem Ausführungsbeispiel ist der erste Mischer 5.1 stationär angeordnet, und der zweite Mischer 5.2 ist beweglich an der Bewegungsvorrichtung 2 angeordnet. Dabei ist der zweite Mischer 5.2 am Kopf 36 der Bewegungsvorrichtung 2 angeordnet, so dass der zweite Mischer 5.2 jeweils in einem Bereich des Applikationsortes ist.

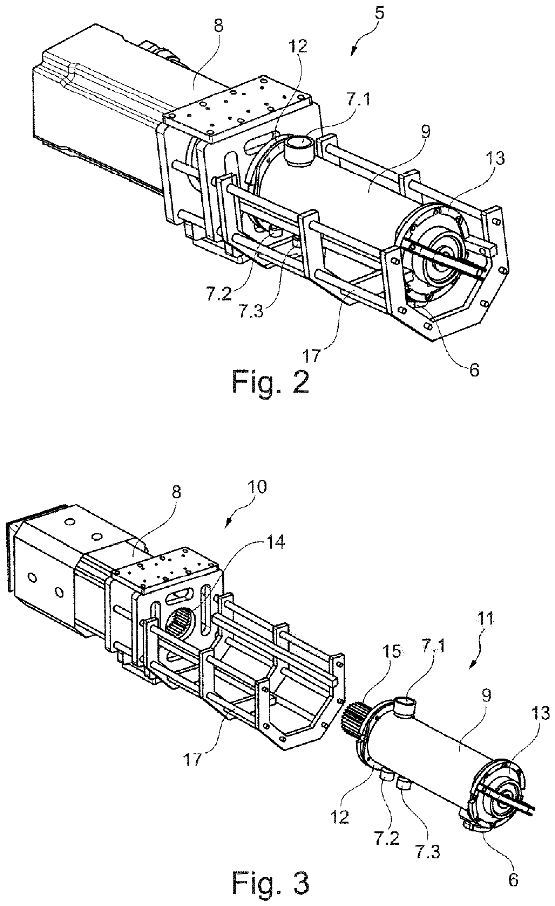

In Fig. 2 ist schematisch ein beispielhafter Mischer 5 dargestellt. Der Mischer 5 umfasst einen Antrieb 8, eine Trommel 9, einen proximalen Verschluss 12, einen distalen Verschluss 13, einen Auslass 6, einen ersten Einlass 7.1, einen zweiten Einlass 7.2, einen dritten Einlass 7.3 und eine Stützeinrichtung 17. Dabei kann bei einer Verwendung des Mischers 5 als zweiter Mischer 5.2 beispielsweise die erste Komponente 3 über den ersten Einlass 7.1 zugeführt werden, die zweite Komponente 4 über den dritten Einlass 7.3, wobei der zweite Einlass 7.2 für eine Reinigung der Trommel 9 mit einer Reinigungsflüssigkeit verwendet werden kann.

Alternativ kann der hier dargestellte Mischer 5 bei einer Verwendung als erster Mischer 5.1 zur Vermischung des ersten Bestandteils 3.1 und des zweiten Bestandteils 3.2 zur Bildung der ersten Komponente 3 verwendet werden. Dann kann beispielsweise der erste Bestandteil 3.1 über den ersten Einlass 7.1 zugeführt werden, der zweite Bestandteil 3.2 kann über den dritten Einlass 7.3 zugeführt werden, wobei der zweite Einlass 7.2 für eine Reinigung der Trommel 9 mit einer Reinigungsflüssigkeit verwendet werden kann.

In diesem Ausführungsbeispiel ist der distale Verschluss 13 über die Stützeinrichtung 17 mit dem Antrieb 8 verbunden, so dass eine Rührwelle (nicht sichtbar in dieser Abbildung) sowohl im proximalen Verschluss 12 als auch im distalen Verschluss 13 gelagert werden kann.

In Fig. 3 ist der gleiche Mischer 5, wie zuvor in Fig. 2 dargestellt, jedoch sind in dieser Abbildung das Antriebsmodul 10 und das Mischkammermodul 11 voneinander getrennt. Dabei ist ersichtlich, dass das Antriebsmodul 10 ein erstes Kupplungselement 14 umfasst, und das Mischkammermodul 11 ein zweites Kupplungselement 15 umfasst. In diesem Ausführungsbeispiel haben die Kupplungselemente 14, 15 jeweils eine Verzahnung, welche in einem Applikationszustand ineinandergreift.

Durch die trennbare Anordnung von Mischkammermodul 11 und Antriebsmodul 10 kann insbesondere das Mischkammermodul 11 vom System 1 entfernt werden, um Reinigungs- und/oder Wartungsarbeiten am Mischkammermodul 11 auszuführen. Insbesondere kann dadurch die Trommel 9 auf einfache Art und Weise gereinigt werden, ohne dass dabei der gesamte Mischer 5 vom System 1 entfernt werden müsste.

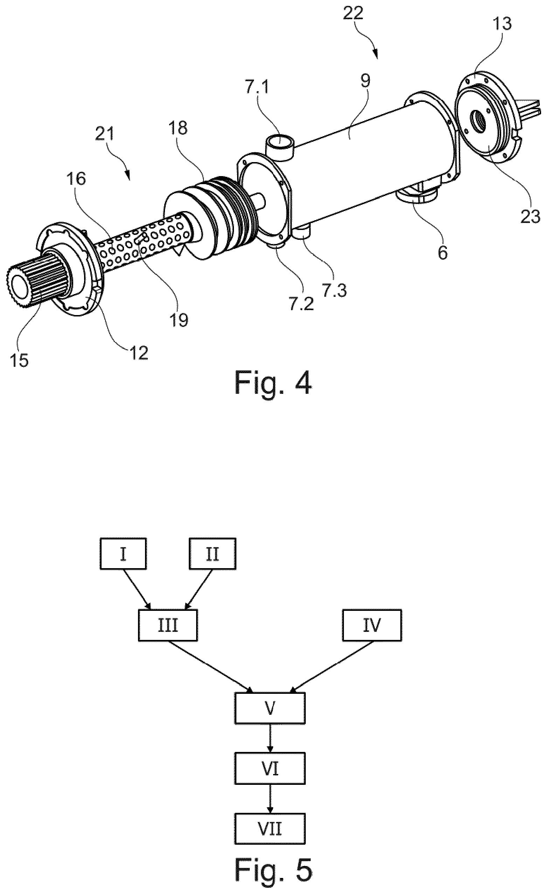

In Fig. 4 ist das Mischkammermodul 11 ohne das Antriebsmodul 10 dargestellt. Dabei ist in Fig. 4 das Mischkammermodul 11 in einem aufgetrennten Zustand abgebildet. In diesem Ausführungsbeispiel umfasst das Mischkammermodul 11 ein Wellenmodul 21 und ein Trommelmodul 22.

Das Wellenmodul 21 umfasst in diesem Ausführungsbeispiel das zweite Kupplungselement 15, den proximalen Verschluss 12, die Rührwelle 16 sowie ein Förderelement 18.

Das Trommelmodul 22 umfasst in diesem Ausführungsbeispiel eine einstückig ausgebildete röhrenförmige Trommel 9 sowie einen distalen Verschluss 13. Die Trommel 9 hat dabei einen ersten Einlass 7.1, einen zweiten Einlass 7.2 und einen dritten Einlass, 7.3, welche alle in einem ersten Endbereich der Trommel 9 angeordnet sind. Der Auslass 6 ist dabei an einem zweiten Endbereich der Trommel 9 angeordnet.

Der distale Verschluss 13 hat in diesem Ausführungsbeispiel eine Opferplatte 23, welche auf einer Seite des distalen Verschlusses 13 angeordnet ist, welche der Trommel 9 zugewandt ist. Die Opferplatte 23 wird in einem Betrieb des Systems abgenutzt und kann bei Bedarf ausgewechselt werden. Dadurch kann der distale Verschluss 13 über einen längeren Zeitraum verwendet werden.

Das Förderelement 18 ist in diesem Ausführungsbeispiel als Förderschnecke ausgebildet. Dabei ist das Förderelement 18 auf der Rührwelle 16 aufsteckbar angeordnet. Zudem ist das Förderelement 18 mit einem Verriegelungselement auf der Rührwelle 16 gesichert (nicht ersichtlich auf dieser Abbildung).

In Fig. 5 ist schliesslich ein Verfahren zum Herstellen einer Struktur aus einem Baustoff schematisch dargestellt. Dabei sind die verschiedenen Verfahrensschritte folgendermassen gegliedert:
I Bereitstellen des ersten Bestandteils der ersten Komponente des Baustoffes
II Bereitstellen des zweiten Bestandteils der ersten Komponente des Baustoffes
III Mischen des ersten Bestandteils und des zweiten Bestandteils zur Bildung der ersten Komponente des Baustoffes
IV Bereitstellen der zweiten Komponente des Baustoffes
V Mischen der ersten Komponente und der zweiten Komponente zur Bildung des Baustoffes
VI Bewegen der Bewegungsvorrichtung zur Veränderung eines Applikationsortes in einem Raum
VII Applizieren des Baustoffes.

Es versteht sich von selbst, dass die hier genannten Verfahrensschritte gleichzeitig ablaufen können, so dass der Baustoff kontinuierlich appliziert werden kann, um eine Struktur aus dem Baustoff herzustellen.

### Bezugszeichenliste

- 1: System
- 2: Bewegungsvorrichtung
- 3: erste Komponente
- 3.1: erster Bestandteil
- 3.2: zweiter Bestandteil
- 4: zweite Komponente
- 5: Mischer
- 5.1: erster Mischer
- 5.2: zweiter Mischer
- 6: Auslass
- 6.1: Auslass des ersten Mischers
- 6.2: Auslass des zweiten Mischers
- 7: Einlass
- 7.1: erster Einlass
- 7.2: zweiter Einlass
- 7.3: dritter Einlass
- 8: Antrieb
- 9: Trommel
- 10: Antriebsmodul
- 11: Mischkammermodul
- 12: proximaler Verschluss
- 13: distaler Verschluss
- 14: erstes Kupplungselement
- 15: zweites Kupplungselement
- 16: Rührwelle
- 17: Stützeinrichtung
- 18: Förderelement
- 19: Rührelement
- 21: Wellenmodul
- 22: Trommelmodul
- 23: Opferplatte
- 27: erstes Schlauchsystem
- 28: zweites Schlauchsystem
- 29: Zuführvorrichtung
- 30: Lagervorrichtung
- 31: Trichter
- 32: Fördereinrichtung
- 33: erste Pumpe
- 34: zweite Pumpe
- 36: Kopf der Bewegungsvorrichtung
- 38: Austrittsöffnung
- 40: Dosiervorrichtung
- I: Bereitstellen des ersten Bestandteils
- II: Bereitstellen des zweiten Bestandteils
- III: Mischen des ersten Bestandteils und des zweiten Bestandteils
- IV: Bereitstellen der zweiten Komponente
- V: Mischen der ersten Komponente und der zweiten Komponente
- VI: Bewegen der Bewegungsvorrichtung
- VII: Applizieren des Baustoffes

## Patentansprüche

1. Verfahren zum Herstellen einer Struktur aus einem Baustoff, das Verfahren umfassend:
Bereitstellen eines ersten Bestandteils (3.1) einer ersten Komponente (3) des Baustoffes;
Bereitstellen eines zweiten Bestandteils (3.2) der ersten Komponente (3) des Baustoffes;
Mischen des ersten Bestandteils (3.1) und des zweiten Bestandteils (3.2) der ersten Komponente (3) in einem ersten Mischer (5.1);
Bereitstellen einer zweiten Komponente (4) des Baustoffes;
Mischen der ersten Komponente (3) und der zweiten Komponente (4) in einem zweiten Mischer (5.2);
Bewegen einer Bewegungsvorrichtung (2) zur Veränderung eines Applikationsortes in einem Raum; und
Applizieren des Baustoffes;
**dadurch gekennzeichnet, dass**
wobei der zweite Mischer (5.2) mit einer Drehzahl von mehr als 500 Umdrehungen pro Minute betrieben wird.

2. Verfahren nach Anspruch 1, wobei der erste Mischer (5.1) mit einer Drehzahl von mehr als 500 Umdrehungen pro Minute betrieben wird.

3. Verfahren nach einem der Ansprüche 1 oder 2, wobei beim Mischen im ersten Mischer (5.1) eine mittlere Verweildauer der Bestandteile im Mischer (5.1, 5.2) weniger als 40 s beträgt, und/oder wobei beim Mischen im zweiten Mischer (5.2) eine mittlere Verweildauer der Komponenten des Baustoffes im Mischer (5.1, 5.2) weniger als 20 s beträgt.

4. Verfahren nach einem der Ansprüche 1 bis 3, wobei beim Bereitstellen des ersten Bestandteils (3.1) der ersten Komponente (3) des Baustoffes der erste Bestandteil (3.1) gravimetrisch dosiert wird, und/oder
wobei beim Bereitstellen des zweiten Bestandteils (3.2) der ersten Komponente (3) des Baustoffes der zweite Bestandteil (3.2) volumetrisch dosiert wird.

5. Verfahren nach einem der Ansprüche 1 bis 4, wobei der Baustoff in zumindest teilweise sich überlagernden Lagen appliziert wird, so dass eine Struktur in einer Art eines 3D-Druckers aufgebaut wird.

## Claims

1. Method for producing a structure from a building material, the method comprising:
providing a first ingredient (3.1) of a first component (3) of the building material;
providing a second ingredient (3.2) of the first component (3) of the building material;
mixing the first ingredient (3.1) and the second ingredient (3.2) of the first component (3) in a first mixer (5.1);
providing a second component (4) of the building material;
mixing the first component (3) and the second component (4) in a second mixer (5.2);
moving a movement device (2) for changing a site of application in a space; and
applying the building material;
**characterized in that**
the second mixer (5.2) is operated at a rotational speed of more than 500 rpm.

2. Method according to Claim 1, wherein the first mixer (5.1) is operated at a rotational speed of more than 500 rpm.

3. Method according to either of Claims 1 and 2, wherein, during the mixing in the first mixer (5.1), an average residence time of the ingredients in the mixer (5.1, 5.2) is less than 40 s, and/or wherein, during the mixing in the second mixer (5.2), an average residence time of the components of the building material in the mixer (5.1, 5.2) is less than 20 s.

4. Method according to one of Claims 1 to 3, wherein, during the providing of the first ingredient (3.1) of the first component (3) of the building material, the first ingredient (3.1) is metered gravimetrically, and/or
wherein, during the providing of the second ingredient (3.2) of the first component (3) of the building material, the second ingredient (3.2) is metered volumetrically.

5. Method according to one of Claims 1 to 4, wherein the building material is applied in at least partially overlapping layers, such that a structure is constructed in the manner of a 3D printer.

## Revendications

1. Procédé de fabrication d'une structure à partir d'un matériau de construction, le procédé comprenant les étapes suivantes :
fournir un premier constituant (3.1) d'un premier composant (3) du matériau de construction ;
fournir un deuxième constituant (3.2) du premier composant (3) du matériau de construction ;
mélanger le premier constituant (3.1) et le deuxième constituant (3.2) du premier composant (3) dans un premier mélangeur (5.1) ;
fournir un deuxième composant (4) du matériau de construction ;
mélanger le premier composant (3) et le deuxième composant (4) dans un deuxième mélangeur (5.2) ;
déplacer un dispositif de déplacement (2) pour modifier un emplacement d'application dans un espace ; et
appliquer le matériau de construction ; **caractérisé en ce que** le deuxième mélangeur (5.2) est mis en oeuvre à une vitesse supérieure à 500 tours par minute.

2. Procédé selon la revendication 1, le premier mélangeur (5.1) étant mis en oeuvre à une vitesse supérieure à 500 tours par minute.

3. Procédé selon l'une des revendications 1 ou 2, lors du mélange dans le premier mélangeur (5.1) un temps de séjour moyen des constituants dans le mélangeur (5.1. 5.2) étant inférieur à 40 s, et/ou lors du mélange dans le deuxième mélangeur (5.2) le temps de séjour moyen des composants du matériau de construction dans le mélangeur (5.1, 5.2) étant inférieur à 20 s.

4. Procédé selon l'une des revendications 1 à 3, lors de la fourniture du premier constituant (3.1) du premier composant (3) du matériau de construction le premier constituant (3.1) étant dosé par gravimétrie, et/ou
lors de la fourniture du deuxième constituant (3.2) du premier composant (3) du matériau de construction le deuxième constituant (3.2) étant dosé par volumétrie.

5. Procédé selon l'une des revendications 1 à 4, le matériau de construction étant appliqué en couches au moins partiellement superposées de sorte qu'une structure est construite dans un type d'imprimante 3D.
